# EUROPÄISCHE PATENTSCHRIFT

(11) **EP 1 840 382 B1**
(45) Veröffentlichungstag und Bekanntmachung des Hinweises auf die Patenterteilung: **26.08.2015**
(21) Anmeldenummer: 07104131.3
(22) Anmeldetag: 14.03.2007
(51) Int. Cl.: H02P 29/02, H02P 6/22, F04D 15/02, F24D 19/10

(54) **Solar-Umwälzpumpe und Verfahren zur Regelung, zur Anlaufsteuerung und Leistungseinstellung einer Solar-Umwälzpumpe**
Solar circulation pump and method for regulating, controlling and adjusting the performance of a solar circulation pump
Pompe de recirculation solaire et procédé de réglage destinés à la commande de démarrage et le réglage de la puissance d'une pompe de recirculation solaire

(30) Priorität: 29.03.2006 DE 102006015693
(43) Veröffentlichungstag der Anmeldung: 03.10.2007
(73) Patentinhaber: Xylem IP Holdings LLC, White Plains, NY 10604 (US)
(72) Erfinder: Laing, Oliver, 70435 Stuttgart (DE)
(74) Vertreter: Hoeger, Stellrecht & Partner Patentanwälte mbB

(56) Entgegenhaltungen:
- DE-A1- 19 755 499
- JP-A- 5 091 707
- JP-A- 2001 245 486
- JP-A- 2002 247 896
- JP-A- 2002 305 890
- US-A- 4 633 157

## Beschreibung

Die Erfindung betrifft eine Solar-Umwälzpumpe zum Anschluss an eine Photovoltaik-Paneleinrichtung, mit einem Elektromotor, welcher elektronisch kommutiert ist und eine Steuerungseinrichtung aufweist, durch welche ein periodisches Kommutierungssignal bereitstellbar ist.

Die Erfindung betrifft ferner ein Verfahren zur Regelung einer Solar-Umwälzpumpe, welche durch eine Photovoltaik-Paneleinrichtung mit elektrischer Energie versorgt wird und welche einen elektronisch kommutierten Elektromotor aufweist.

Aus der JP 2002247896 ist ein Solarpumpensystem bekannt, welches eine Pumpe umfasst, die durch einen DC-Motor angetrieben ist, unter Verwendung einer Solarbatterie als Energieversorger. Es ist ein Kontroller vorgesehen, welcher den Betriebsstrom und die Drehzahl des Motors detektiert und einen Arbeitspunkt sucht, an welchem das Produkt des Betriebsstroms und der Umdrehung maximal ist, um die Drehung des Motors zu kontrollieren.

Aus der DE 197 55 499 A1 ist eine Schaltungsanordnung zur Optimierung der Leistungsübertragung zwischen einem Generator, der eine natürliche, ungleichmäßige Energiequelle nutzt und gleichstromgespeisten Verbrauchern wie Pumpen bekannt, wobei der Generator seinen Strom ständig auf einen elektrischen Zwischenspeicher liefert.

Solar-Umwälzpumpen zum Anschluss an eine Photovoltaik-Paneleinrichtung werden im Zusammenhang mit solarthermischen Kollektoreinrichtungen verwendet. Sie dienen zur Förderung von flüssigem Medium, insbesondere Wasser, durch die Solarkollektoreinrichtung zur Erhitzung des Mediums. Die Photovoltaik-Paneleinrichtung stellt die notwendige elektrische Energie zum Betrieb der Solar-Umwälzpumpe bereit.

Da die solaren Einstrahlungsbedingungen variieren, variiert die elektrische Energieversorgung von Solar-Umwälzpumpen, was mit Problemen behaftet sein kann.

Der Erfindung liegt die Aufgabe zugrunde, eine Solar-Umwälzpumpe der eingangs genannten Art bereitzustellen, welche bei einfachem Aufbau verbesserte Betriebseigenschaften aufweist.

Diese Aufgabe wird bei der eingangs genannten Solar-Umwälzpumpe erfindungsgemäß dadurch gelöst, dass die Steuerungseinrichtung so ausgebildet ist, dass das Kommutierungssignal bezüglich des Verhältnisses von Einschaltzeit zu Ausschaltzeit variiert wird, wobei die Steuerungseinrichtung einen Regelkreis umfasst, bei welchem die Drehzahl eines Rotors des Elektromotors die Regelgröße ist und das Verhältnis von Einschaltzeit und Ausschaltzeit am Kommutierungssignal die Steuergröße ist, wobei die Variation des Verhältnisses von Einschaltzeit und Ausschaltzeit am Kommutierungssignal durch Schritte der Vergrößerung oder Verkleinerung des Verhältnisses erfolgt, und das Regelziel für die Regelgröße eine Maximierung der Drehzahl ist, und wobei eine Messeinrichtung für die Drehzahl oder für eine die Drehzahl charakterisierende Größe vorgesehen ist.

Das Kommutierungssignal sorgt dafür, dass eine Rotation eines Rotors des Elektromotors erfolgt. Spulen des Elektromotors werden durch das Kommutierungssignal phasenversetzt angesteuert. Über einen duty cycle erfolgt eine Variation innerhalb des Kommutierungssignals, das heisst das Verhältnis von Einschaltzeit zu Ausschaltzeit wird variiert. Dadurch wird der Prozentsatz der Einschaltzeit bezogen auf eine Periode des Kommutierungssignals variiert.

Die solaren Einstrahlungsbedingungen variieren, so dass die durch die Photovoltaik-Paneleinrichtung bereitgestellte elektrische Leistung zeitlich schwankt. Dadurch kann die Drehzahl der Solar-Umwälzpumpe (als Drehzahl des Rotors des Elektromotors) variieren. Durch die Variation des Verhältnisses von Einschaltzeit zu Ausschaltzeit im Kommutierungssignal lässt sich eine Maximierung der Drehzahl bei gegebenen Einstrahlungsbedingungen erreichen, da sich das für gegebene Einstrahlungsbedingungen optimierte Verhältnis von Einschaltzeit zu Ausschaltzeit auffinden lässt.

Insbesondere ist das Kommutierungssignal kontinuierlich variierbar. Dadurch lässt sich eine permanente Variation des Verhältnisses von Einschaltzeit und Ausschaltzeit durchführen, um so kontinuierlich für eine Optimierung der Solar-Umwälzpumpe zu sorgen.

Beispielsweise ist eine Variation des Kommutierungssignals in seiner Form und/oder in seiner Amplitude vorgesehen. Es ist insbesondere bekannt, einen elektronisch kommutierten Motor über Blockkommutierung zu betreiben. Das entsprechende Kommutierungssignal umfasst stufenförmige Pulse. Über die Änderung der Pulslänge innerhalb einer Periode lässt sich das Verhältnis von Ausschaltzeit zu Einschaltzeit verändern. Es ist auch eine Sinuskommutierung bekannt, bei welcher das Kommutierungssignal Sinuskurven bzw. Sinus-Ein-hüllenden-Kurven umfasst. Beispielsweise wird das entsprechende Signal aus einzelnen Pulsen generiert, die in ihrer Pulshöhe so eingestellt sind, dass sich eine Sinuskurve ergibt. Eine Variation des Verhältnisses von Einschaltzeit zu Ausschaltzeit lässt sich erreichen, wenn solche Signalpulse mit einem duty cycle multipliziert werden. Dadurch wird die Hüllamplitude der Sinuskurve variiert, wobei die Sinusform an sich erhalten bleibt.

Insbesondere erfolgt die Variation des Kommutierungssignals bezüglich Einschaltzeit und Ausschaltzeit (duty cycle) auf einer Zeitskala, welche sehr viel größer ist als eine Periode des Kommutierungssignals. Diese Zeitskala der Variation ist eine Zeitskala, auf welcher eine Variation der solaren Einstrahlungsbedingungen erwartet wird. Sie liegt insbesondere im Zehntelsekundenbereich oder größer.

Erfindungsgemäß erfolgt die Variation des Verhältnisses von Einschaltzeit und Ausschaltzeit am Kommutierungssignal durch Schritte der Vergrößerung oder Verkleinerung des Verhältnisses. Es erfolgt insbesondere ein Hin- und Hertakten des duty cycles mit dem Ziel, die Drehzahl des Rotors des Elektromotors zu maximieren.

Die Steuerungseinrichtung umfasst einen Regelkreis, bei welchem die Drehzahl eines Rotors des Elektromotors die Regelgröße ist und das Verhältnis von Einschaltzeit und Ausschaltzeit am Kommutierungssignal die Steuergröße ist. Dieser Regelkreis lässt sich insbesondere softwaremäßig in der Steuerungseinrichtung realisieren. Der duty cycle wird so variiert, dass sich die optimierte, nämlich maximale Drehzahl, ergibt. Beispielsweise wird ausgehend von einem bestimmten Verhältnis das Verhältnis von Einschaltzeit zu Ausschaltzeit vergrößert. Wenn sich dadurch eine Erhöhung der Drehzahl ergibt, wird eine weitere Erhöhung durchgeführt. Wenn sich eine Erniedrigung der Drehzahl ergibt, erfolgt eine Taktung in der anderen Richtung.

Das Regelziel für die Regelgröße ist eine Maximierung der Drehzahl, um so eine optimierte Pumpenleistung zu erhalten. Dadurch lässt sich auf einfache Weise eine Selbstoptimierung der Solar-Umwälzpumpe erreichen, ohne dass eine externe Regelungseinrichtung notwendig ist. Diese Selbstoptimierung bzw. Selbstregelung der Solar-Umwälzpumpe lässt sich auf einfache Weise durch eine integrierte Steuerungseinrichtung realisieren.

Es ist eine Messeinrichtung für die Drehzahl oder für eine die Drehzahl charakterisierende Größe vorgesehen. Dadurch lässt sich die Drehzahl bestimmen, um so das Verhältnis von Einschaltzeit und Ausschaltzeit gezielt variieren zu können, um eine maximierte Drehzahl zu erreichen.

Insbesondere ist die Messeinrichtung durch einen integrierten Positionsgeber des Elektromotors gebildet. Dieser integrierter Positionsgeber umfasst beispielsweise einen oder mehrere Hall-Sensoren.

Es ist grundsätzlich auch möglich, dass eine Leistungsmesseinrichtung für den Elektromotor vorgesehen ist. Die Leistung ist direkt abhängig von der Drehzahl. Das Regelziel der Maximierung der Drehzahl entspricht einem Regelziel der Maximierung der Leistung.

Günstigerweise ist der Regelkreis in den Elektromotor integriert. Dadurch lässt sich ein einfacher und kostengünstiger Aufbau erreichen.

Die eingangs genannte Aufgabe wird ferner erfindungsgemäß durch die eingangs genannte Solar-Umwälzpumpe gelöst, dass durch die Steuerungseinrichtung prüfbar ist, ob genügend elektrische Energie für eine Ausrichtung und/oder einen nachfolgenden Anlauf eines Rotors des Elektromotors bereitsteht.

Nach der Initialisierung der Steuerungseinrichtung erfolgt eine Ausrichtung des Rotors des Elektromotors und nach der Ausrichtung erfolgt der Anlauf des Elektromotors. Die dazu notwendige Energie wird von der Photovoltaik-Paneleinrichtung zumindest indirekt bereitgestellt. Es kann nun vorkommen, dass nicht genügend elektrische Energie zur Ausrichtung bzw. zum Anlauf des Elektromotors vorhanden ist. Beispielsweise liefert eine Photovoltaik-Paneleinrichtung morgens wenig Strom bei hoher Spannung. Die Solar-Umwälzpumpe bildet einen Ohmschen Widerstand im Stromkreis. Sie schließt dann bei einem erfolglosen Startversuch kurz. Es kann dann zu einem häufigen erfolglosen Antakten der Solar-Umwälzpumpe kommen, wenn solche Anlauf-Kurzschlüsse vorliegen. Es ist dabei grundsätzlich so, dass die Ausrichtung bzw. der Anlauf des Elektromotors mit einer Geräuschemission verbunden ist.

Bei der erfindungsgemäßen Lösung wird geprüft, ob genügend elektrische Energie bereitsteht, ohne dass eine Bewegung des Rotors erfolgt. Dadurch wird eine unnötige Geräuschemission verhindert, wenn nicht genügend elektrische Energie bereitsteht.

Weiterhin lässt sich durch die erfindungsgemäße Lösung sicherstellen, dass ein Pufferspeicher soweit aufgeladen werden kann, dass für eine Ausrichtung und für einen Anlauf des Elektromotors genügend elektrische Energie bereitsteht.

Günstig ist es, wenn dem Elektromotor ein Pufferspeicher für elektrische Energie zugeordnet ist. In diesem Pufferspeicher wird elektrische Energie bereitgestellt, um für eine Ausrichtung des Rotors und einen Anlauf des Elektromotors zu sorgen.

Günstig ist es, wenn der Pufferspeicher in die Solar-Umwälzpumpe bzw. in den Elektromotor integriert ist.

Ganz besonders vorteilhaft ist es, wenn der Pufferspeicher zwischen einer Motorelektronikanordnung des Elektromotors und der Photovoltaik-Paneleinrichtung angeordnet ist. Der Pufferspeicher kann durch von der Photovoltaik-Paneleinrichtung bereitgestellte elektrische Energie aufgeladen werden. Diese steht dann bereit, um für eine Ausrichtung des Rotors und für einen Anlauf des Elektromotors zu sorgen.

Der Pufferspeicher ist insbesondere in die Solar-Umwälzpumpe integriert. Es ist dann günstig, wenn der Pufferspeicher zwischen der Motorelektronikanordnung und einem elektrischen Anschluss für die Photovoltaik-Paneleinrichtung angeordnet ist.

Ganz besonders vorteilhaft ist es, wenn durch die Steuerungseinrichtung ein Zeitfenster zwischen Ausrichtung des Rotors und Anlaufen des Elektromotors vorgebbar ist. Beispielsweise liegt die Dauer für ein solches Zeitfenster im Sekundenbereich; beispielsweise liegt es in der Größenordnung von drei Sekunden. Durch die Vorgabe des Zeitfensters lässt sich eine zeitliche Entzerrung zwischen der Ausrichtung des Rotors und dem Anlaufen des Elektromotors (zur permanenten Drehung des Rotors) erreichen. Dadurch lässt sich gewährleisten, dass nach der Ausrichtung des Rotors genügend elektrische Energie zum Anlaufen des Elektromotors bereitsteht.

Es kann vorgesehen sein, dass der Elektromotor eine Mehrzahl von Spulen aufweist und dass durch die Steuerungseinrichtung eine Last an eine Spule anlegbar ist, um zu prüfen, ob für eine Ausrichtung des Rotors und/oder ein Anlauf des Elektromotors ausreichend elektrische Energie bereitsteht. Die Last wird angelegt und es wird dann geprüft, ob sich eine ausreichende Spannung in der Spule aufbauen kann oder ob diese Spannung zusammenbricht. Wenn sich eine genügende Spannung aufbauen kann, dann wird für eine vollständige Spannungsbeaufschlagung des Elektromotors gesorgt, um eine Ausrichtung des Rotors zu erreichen und einen Anlauf durchzuführen.

Günstig ist es, wenn die Last so anlegbar ist, dass keine Bewegung des Rotors des Elektromotors erfolgt. Insbesondere erfolgt eine Lastanlegung nur an eine einzige Spule des Elektromotors, um eine Bewegung des Rotors zu verhindern.

Ganz besonders vorteilhaft ist es, wenn durch die Steuerungseinrichtung die Lastanlegung an die Spule nach einem Initialisierungsvorgang vor Ausrichtung des Rotors des Elektromotors erfolgt. Dadurch werden Rotorbewegungen mit der entsprechenden Geräuschemission verhindert, wenn nicht ausreichende elektrische Energie zum Anlauf bereitsteht. Dadurch lässt sich auch sicherstellen, dass ein Pufferspeicher genügend aufgeladen wird, um für eine Ausrichtung des Rotors und einen Anlauf des Elektromotors zu sorgen.

Die eingangs genannte Aufgabe wird bei der eingangs genannten Solar-Umwälzpumpe ferner erfindungsgemäß dadurch gelöst, dass die Steuerungseinrichtung eine Einstelleinrichtung umfasst, durch welche eine untere Grenze für die Spannungsbeaufschlagung des Elektromotors feststellbar einstellbar ist.

Eine Solar-Umwälzpumpe wird an eine Solarkollektoreinrichtung angeschlossen. Die Solarkollektoreinrichtung kann eine unterschiedliche Anzahl von Solarkollektoren umfassen. Entsprechend muss die Förderleistung der Solar-Umwälzpumpe angepasst sein.

Durch eine erfindungsgemäße Einstelleinrichtung lässt sich eine Solar-Umwälzpumpe an eine weite Bandbreite von Solarkollektoreinrichtungen anpassen. Dadurch lässt sich die Solar-Umwälzpumpe bei der Installation des Systems fest einstellen, um eine optimierte Arbeitsweise zu erhalten.

Es wird dabei eine untere Grenze für die Spannungsbeaufschlagung des Elektromotors fest eingestellt, wobei der tatsächliche Wert der unteren Grenze abhängig ist von der Ausbildung der Solarkollektoreinrichtung.

Dadurch lässt sich eine Leistungsdrosselung der Solar-Umwälzpumpe einstellen, welche so ausgeführt ist, dass bei einer Verminderung der solaren Einstrahlung die Förderleistung der Pumpe mindestens näherungsweise proportional zurückgeht. Dadurch wird eine unnötige Umschichtung in einem Mediumspeicher verhindert und eine Stratifizierung erreicht. Über das Vorsehen einer Einstelleinrichtung lässt sich eine Selbstoptimierung der Solar-Umwälzpumpe angepasst an die entsprechende Solarkollektoreinrichtung erreichen.

Die untere Grenze der Spannungsbeaufschlagung ist insbesondere bezogen auf eine maximale Leerlaufspannung der Photovoltaik-Paneleinrichtung.

Günstig ist es, wenn durch die Einstelleinrichtung eine Leistungsdrosselung der Solar-Umwälzpumpe einstellbar ist. Dadurch lässt sich die Förderleistung und die Verminderung der Förderleistung angepasst an die Solarkollektoreinrichtung, an welche die Solar-Umwälzpumpe angeschlossen wird, optimiert einstellen.

Insbesondere ist durch die Einstelleinrichtung die untere Grenze der Spannungsbeaufschlagung in einem Bruchteilbereich der maximalen Leerlaufspannung der Photovoltaik-Paneleinrichtung einstellbar. Die Leistung einer Photovoltaik-Paneleinrichtung (I x U) nimmt bei steigender Spannung bis zu einem Maximum zu und nimmt dann ab. Zu der maximalen Leerlaufspannung hin nimmt die Leistung ab. Durch die Einstellung einer unteren Spannung wird gewährleistet, dass man eine angepasste Förderleistung auch bei Verringerung der solaren Einstrahlung erhält.

Insbesondere liegt der Bruchteilbereich zwischen mindestens 50 % und höchstens 95 % der maximalen Leerlaufspannung. Der Bereich hängt davon ab, wie die Solarkollektoreinrichtung ausgebildet ist. Wenn diese eine große Anzahl von Solarkollektoren enthält, dann liegt der Bruchteilbereich eher bei 50 %. Wenn diese nur einen Solarkollektor enthält, dann liegt der Bruchteilbereich eher bei 95 %.

Der Elektromotor ist beispielsweise ein bürstenloser Gleichstrommotor. Er kann einen permanentmagnetischen Stator aufweisen.

Der Erfindung liegt ferner die Aufgabe zugrunde, ein Verfahren zur Regelung einer Solar-Umwälzpumpe der eingangs genannten Art bereitzustellen, welches auf einfache Weise ausführbar ist.

Diese Aufgabe wird erfindungsgemäß dadurch gelöst, dass ein Kommutierungssignal ständig bezüglich des Verhältnisses von Einschaltzeit und Ausschaltzeit variiert wird, wobei die Variation des Verhältnisses von Einschaltzeit und Ausschaltzeit am Kommutierungssignal durch Schritte der Vergrößerung oder Verkleinerung des Verhältnisses erfolgt, und wobei die Variation mit dem Ziel der Maximierung der Drehzahl eines Rotors des Elektromotors durchgeführt wird und die Drehzahl oder eine die Drehzahl charakterisierende Größe gemessen wird.

Die Vorteile des erfindungsgemäßen Verfahrens wurden bereits im Zusammenhang mit der erfindungsgemäßen Solar-Umwälzpumpe gemäß Anspruch 1 erläutert.

Weitere vorteilhafte Ausführungsformen wurden ebenfalls bereits mit weiteren Ausführungsbeispielen der Solar-Umwälzpumpe gemäß Anspruch 1 erläutert.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung einer Solarkollektor-Anordnung mit einer Photovoltaik-Paneleinrichtung und einer Solar-Umwälzpumpe;
- Figur 2: eine schematische Darstellung eines Ausführungsbeispiels eines Elektromotors einer erfindungsgemäßen Solar-Umwälzpumpe;
- Figur 3: eine schematische Darstellung eines Teils eines Beispiels eines Kommutierungssignals;
- Figur 4: eine schematische Darstellung eines Teils eines weiteren Beispiels eines Kommutierungssignals; und
- Figur 5: ein Strom-Spannungs-Diagramm einer Photovoltaik-Paneleinrichtung bei verschiedenen Einstrahlungsbedingungen.

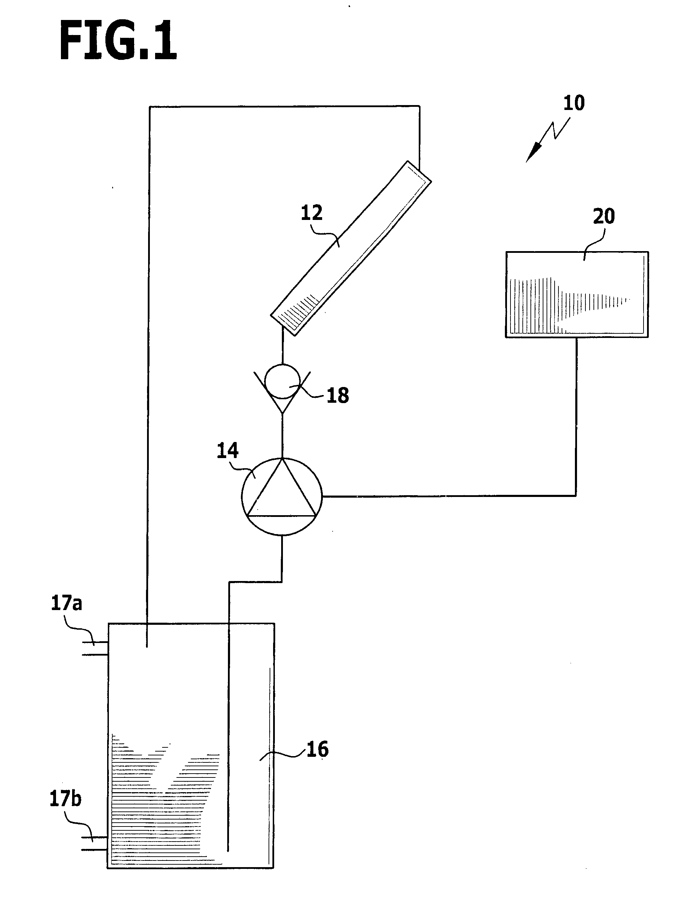

Eine solarthermische Anordnung (Solarkollektor-Anordnung), welche in Figur 1 schematisch gezeigt und dort mit 10 bezeichnet ist, umfasst eine solarthermische Kollektoreinrichtung 12, an welcher ein flüssiges Medium, insbesondere Wasser, solarthermisch erwärmbar ist. Zur Förderung des Mediums ist eine Solar-Umwälzpumpe 14 vorgesehen. Die Solar-Umwälzpumpe 14 ist zwischen einem Mediumspeicher 16 und der solarthermischen Kollektoreinrichtung 12 angeordnet. Medium wird von der Solar-Umwälzpumpe 14 aus dem Mediumspeicher 16 zu der solarthermischen Kollektoreinrichtung 12 gefördert, um dieses dort zu erwärmen. Erwärmtes Medium wird von der solarthermischen Kollektoreinrichtung 12 in den Mediumspeicher 16 zurückgeführt. Aus dem Mediumspeicher 16 kann (erwärmtes) Medium an einem (oberen) Auslass 17a entnommen werden. Entsprechend ist eine Nachführungseinrichtung vorgesehen, um bei einer Mediumentnahme wieder (zu erwärmendes) Medium über einen (unteren) Einlass 17b zuführen zu können.

Zwischen der Solar-Umwälzpumpe 14 und der solarthermischen Kollektoreinrichtung 12 ist ein Rückschlagventil 18 angeordnet, das dafür sorgt, dass Medium nicht von der Solarkollektoreinrichtung 12 zur Solar-Umwälzpumpe 14 zurückfließen kann.

Die Solar-Umwälzpumpe 14 ist durch Solarenergie betrieben. Sie ist dazu mit einer Photovoltaik-Paneleinrichtung 20 verbunden, welche die zum Betrieb der Solar-Umwälzpumpe 14 notwendige elektrische Energie bereitstellt.

Die Photovoltaik-Paneleinrichtung 20 steht in räumlicher Beziehung mit der solarthermischen Kollektoreinrichtung 12; diese Beziehung ist vorzugsweise derart, dass für die Photovoltaik-Paneleinrichtung 20 und für die solarthermische Kollektoreinrichtung 12 mindestens näherungsweise die gleichen solaren Einstrahlungsbedingungen vorliegen.

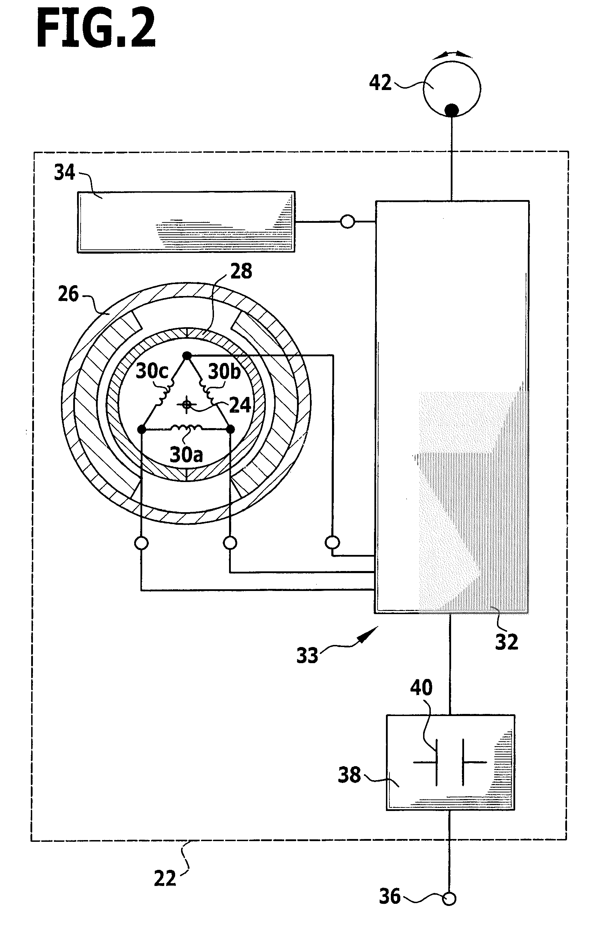

Die Solar-Umwälzpumpe 14 umfasst einen Elektromotor 22 (Figur 2) mit einem um eine Drehachse 24 rotierbaren Rotor 26. Ferner weist der Elektromotor 22 einen Stator 28 auf.

Bei dem Elektromotor 22 handelt es sich um einen elektronisch kommutierten Elektromotor wie beispielsweise einen bürstenlosen Gleichstrommotor. Bei dem in Figur 2 gezeigten Ausführungsbeispiel ist der Rotor 26 permanentmagnetisch ausgebildet und an dem Stator 28 sind eine Mehrzahl von Spulen 30a, 30b, 30c angeordnet, wobei an die Spulen 30a, 30b, 30c ein periodisches Kommutierungssignal angelegt wird. Die Teilkommutierungssignale für die jeweiligen Spulen 30a, 30b, 30c sind phasenversetzt zueinander. Bei drei Spulen beträgt der Phasenversatz 120°.

Es ist grundsätzlich auch möglich, dass der Stator permanentmagnetisch ausgebildet wird und der Rotor eine Mehrzahl von Spulen aufweist, welche mit einem Kommutierungssignal beaufschlagt werden.

Bei dem in Figur 2 gezeigten Ausführungsbeispiel ist der Stator 28 innenliegend und der Rotor 26 außenliegend (Außenläufer). Es ist auch möglich, dass der Rotor 26 innenliegend (Innenläufer) ist und der Stator 28 außenliegend.

Ein Laufrad der Solar-Umwälzpumpe 14 ist drehfest mit dem Rotor 26 verbunden.

Der Rotor 26 kann über eine Rotorwelle drehbar um die Drehachse 24 gelagert sein. Es ist beispielsweise auch möglich, dass der Rotor 26 über ein sphärisches Lager bezüglich des Stators 28 drehbar gelagert ist.

Der Elektromotor 22 weist eine Steuerungseinrichtung 32 auf, welche an die Spulen 30a, 30b, 30c gekoppelt ist, um diesen das Kommutierungssignal bereitzustellen. Die Steuerungseinrichtung 32 kann ganz oder teilweise als integrierte Schaltung realisiert sein. Insbesondere weist sie einen oder mehrere Prozessoren auf. Sie bildet insbesondere eine Motorelektronikanordnung 33 oder ist zumindest Teil dieser.

Dem Rotor 26 ist eine Messeinrichtung 34 zugeordnet, durch welche die Drehzahl des Rotors 26 messbar ist. Diese Messeinrichtung 34 ist mit der Steuerungseinrichtung 32 verbunden.

Beispielsweise ist die Messeinrichtung 34 als Positionsgeber und insbesondere integrierter Positionsgeber ausgebildet, welcher beispielsweise ein oder drei Hall-ICs umfasst.

Der Elektromotor 22 erhält seine elektrische Energie von der Photovoltaik-Paneleinrichtung 20. Er weist eine entsprechende Anschlusseinrichtung 36 zum Anschluss an die Photovoltaik-Paneleinrichtung 20 auf.

Dem Elektromotor 22 ist ein Pufferspeicher 38 für elektrische Energie zugeordnet. Dieser Pufferspeicher 38 ist zwischen der Motorelektronikanordnung 33 und der Photovoltaik-Paneleinrichtung 20 angeordnet. Der Pufferspeicher 38 ist durch elektrische Energie, welche von der Photovoltaik-Paneleinrichtung 20 geliefert wird, aufladbar. Durch ihn ist elektrische Energie zum Ausrichten/Anlaufen des Rotors 26 bereitstellbar.

Der Pufferspeicher 38 ist insbesondere an die Steuerungseinrichtung 32 gekoppelt.

Der Pufferspeicher 38 umfasst einen oder mehrere Kondensatoren 40 zur Pufferspeicherung von elektrischer Energie.

Der Pufferspeicher 38 ist insbesondere in die Solar-Umwälzpumpe 14 bzw. den Elektromotor 22 integriert.

Der Steuerungseinrichtung 32 ist eine Einstelleinrichtung 42 zugeordnet, über welche die minimale Spannung, mit welcher der Elektromotor 22 beaufschlagt wird, einstellbar ist. Durch die Einstelleinrichtung 42 ist diese minimale Spannung festgelegt einstellbar. Dadurch lässt sich, wie unten noch näher beschrieben, eine Leistungsdrosselung der Solar-Umwälzpumpe 14 fest einstellen, um eine Anpassung an die Anzahl von Kollektoren der solarthermischen Kollektoreinrichtung 12 zu realisieren.

Die feste Einstellung der minimalen Spannungsbeaufschlagung des Elektromotors 22 über die Einstelleinrichtung 42 erfolgt insbesondere bei der Installation der solarthermischen Anordnung 10.

Die erfindungsgemäße Solar-Umwälzpumpe 14 funktioniert wie folgt:

Bei Sonnenbestrahlung der solarthermischen Anordnung 10 wird durch die Photovoltaik-Paneleinrichtung 20 die Solar-Umwälzpumpe 14 mit elektrischer Energie versorgt. Bei ausreichender Energieversorgung wird der Rotor 26 in Rotation versetzt und treibt das Laufrad der Solar-Umwälzpumpe 14 an. Dadurch wird flüssiges Medium gefördert und durch die solarthermische Kollektoreinrichtung 12 hindurch transportiert. Das flüssige Medium erwärmt sich dort. Erwärmtes Medium wird in den Mediumspeicher 16 zurückgeführt, von wo es bei Bedarf entnommen werden kann.

Die solaren Einstrahlungsbedingungen variieren zeitlich. Beispielsweise steht bei Wolkenbedeckung weniger elektrische Energie zum Betrieb des Elektromotors 22 bereit.

Beim Anlaufen der Solar-Umwälzpumpe 14 wird zunächst die Steuerungseinrichtung 32 und insbesondere ein von dieser umfasster Prozessor initialisiert. Anschließend muss der Rotor 26 bezüglich des Stators 28 ausgerichtet werden, um eine Rotationsbewegung initiieren zu können. Die entsprechende Energie zur Ausrichtung des Rotors 26 stammt von dem Pufferspeicher 38.

Nach der Ausrichtung des Rotors 26 kann dieser, wenn genügend elektrische Energie bereitsteht, anlaufen. Die elektrische Energie zum Anlaufen stammt wiederum aus dem Pufferspeicher 38.

Erfindungsgemäß ist es vorgesehen, dass nach Initialisierung der Steuerungseinrichtung 32 geprüft wird, ob ausreichend elektrische Energie für eine Ausrichtung des Rotors 26 bzw. ein Anlauf des Rotors 26 bereitsteht. Beispielsweise wird eine Last an eine der Spulen 30a, 30b, 30c angelegt. Es wird dann geprüft, ob sich bei Lastanlegung eine genügend große Spannung aufbauen kann oder ob die Spannung zusammenbricht. Die Lastanlegung erfolgt derart, dass der Rotor 26 sich nicht dreht.

Durch diese Vorgehensweise wird verhindert, dass eine Rotorausrichtung 26 bzw. ein Anlaufen erfolgt, wenn nicht ausreichend elektrische Energie bereitsteht. Das Ausrichten des Rotors 26 bzw. das Anlaufen ist mit Geräuschemission verbunden. Durch das erfindungsgemäße Prüfungsverfahren wird eine unnötige Geräuschemission verhindert.

Ferner wird dafür gesorgt, dass sich der Pufferspeicher 38 aufladen kann. Es erfolgt eine zeitliche Entzerrung zwischen dem Ausrichten bzw. Anlaufen des Rotors 26 und dem Aufladen des Pufferspeichers 38. Es wird verhindert, dass die Solar-Umwälzpumpe 14 nach der Initialisierung der Steuerungseinrichtung 32 sofort startet; es wird zunächst geprüft, ob genügend elektrische Energie bereitsteht. Weiterhin wird durch die Steuerungseinrichtung 32 ein Zeitfenster zwischen dem Ausrichten des Rotors 26 und dem Anlaufen des Elektromotors 22 gelegt. Die Länge dieses Zeitfensters liegt beispielsweise in der Größenordnung von drei Sekunden. Dadurch wird sichergestellt, dass nach der Ausrichtung des Rotors 26 mit dem entsprechenden Energieverbrauch der Pufferspeicher 38 wieder soweit gefüllt ist, dass genügend Energie für den Anlauf des Elektromotors 22 bereitsteht.

Durch diese erfindungsgemäße Vorgehensweise lässt sich die Solar-Umwälzpumpe 14 auf effektive Weise betreiben.

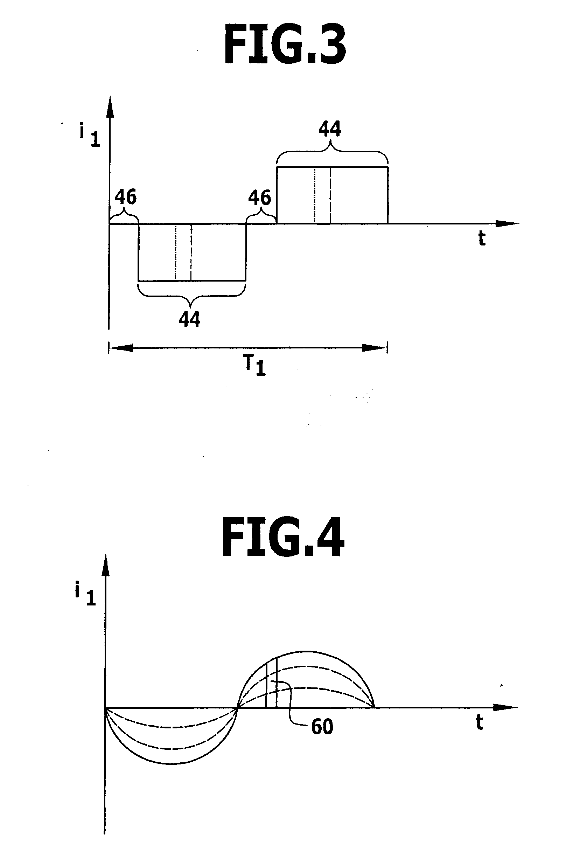

Die Spulen 30a, 30b, 30c des Elektromotors 22 werden beim Betrieb des Elektromotors 22 über die Steuerungseinrichtung 32 durch das Kommutierungssignal beaufschlagt. In Figur 3 ist schematisch ein Teil eines Beispiels eines Kommutierungssignals als Strom i₁ für die Spule 30a gezeigt. Das in Figur 3 gezeigte Teil-Kommutierungssignal ist stufenförmig. Entsprechende Kommutierungssignale werden bei der Block-Kommutierung verwendet. Das Kommutierungssignal ist periodisch.

Das Kommutierungssignal setzt sich aus den Teilkommutierungssignalen für die Spulen 30a, 30b, 30c zusammen, wobei die Teilkommutierungssignale um 120° phasenversetzt zueinander sind.

Erfindungsgemäß ist es beim Betrieb der Solar-Umwälzpumpe 14 vorgesehen, dass durch die Steuerungseinrichtung 32 das Verhältnis von Einschaltzeit zu Ausschaltzeit (duty cycle) variiert. In Figur 3 ist für einen Teil des Kommutierungssignal für eine Periode mit der Zeitdauer T₁ die Einschaltzeit mit dem Bezugszeichen 44 angedeutet. Die Ausschaltzeit ist mit dem Bezugszeichen 46 angedeutet. Durch Variation des Verhältnisses von Einschaltzeit 44 zu Ausschaltzeit 46 stellt die Steuerungseinrichtung 32 die Einschaltquote im Kommutierungssignal ein.

In Figur 3 sind gestrichelt und gepunktet andere Verhältnisse von Einschaltzeit 44 zu Ausschaltzeit 46 angedeutet.

Es kann beispielsweise auch eine Sinuskommutierung vorgesehen sein. In Figur 4 ist ein entsprechendes Teil-Kommutierungssignal für die Spule 30a gezeigt. Dieses (periodische) Kommutierungssignal wird zusammengesetzt aus einzelnen Stufen, welche eine solche Höhe aufweisen, dass sich durch ihre Zusammensetzung nach Glättung eine Sinuskurve ergibt. Die einzelnen Stufen 60 werden durch entsprechende Halbleiterbauelemente der Motorelektronikanordnung 33 hergestellt. Die Periode für die Erzeugung der Stufen 60 liegt beispielsweise in der Größenordnung von 20 kHz.

Die Höhe der Stufen 60 ist variierbar. Ein duty cycle wird dann der Stufenbildung durch die Motorelektronikanordnung 33 überlagert. Dadurch lässt sich das Verhältnis von Ausschaltzeit zu Einschaltzeit variieren.

Diese Überlagerung eines (langsamen) duty cycle entspricht einer Variation der Amplitude bzw. Hüllamplitude der Sinuskurve des Kommutierungssignals. Die Form des Kommutierungssignals als Sinussignal bleibt dabei unverändert, nur die Amplitude bzw. Hüllamplitude ändert sich.

Bei einem Sinus-Kommutierungssignal wird das Verhältnis von Einschaltzeit und Ausschaltzeit durch Amplituden- bzw. Hüllamplituden-Variation erreicht.

Die Steuerungseinrichtung 32 umfasst einen Regelkreis, welcher insbesondere softwaremäßig realisiert ist. Die Regelgröße dieses Regelkreises ist die Drehzahl des Rotors 26 des Elektromotors 22. Das Regelziel für diese Regelgröße ist eine Maximierung der Drehzahl, um eine maximale Leistung der Solar-Umwälzpumpe 14 zu erhalten. Die Steuergröße ist das Verhältnis der Einschaltzeit 44 zur Ausschaltzeit 46 (duty cycle).

Es wird so vorgegangen, dass eine ständige Variation des duty cycles erfolgt und zwar in der Richtung, dass das Regelziel maximale Drehzahl erreicht wird. Es erfolgt dabei eine Variation des Verhältnisses von Einschaltzeit 44 zu Ausschaltzeit 46, wobei diese Variation vorzugsweise in Schritten erfolgt. Die Zeitskala dieser Variation ist angepasst an eine typische Zeitskala für Änderungen in den solarthermischen Einstrahlungbedingungen. Beispielsweise liegt diese Zeitskala in der Größenordnung einer Sekunde. Diese Zeitskala ist langsam gegenüber der Zeitskala des Kommutierungssignals.

Wenn das Kommutierungssignal eine Frequenz von 20 kHz aufweist, dann liegt die Periodendauer T₁ bei 50 µs. Die Zeitskala der Variation ist um einen Faktor 20.000 langsamer.

Die Regelung erfolgt derart, dass ausgehend von einem bestimmten Verhältnis von Einschaltzeit 44 zu Ausschaltzeit 46 das Verhältnis beispielsweise vergrößert wird. Es wird dann überprüft, ob sich die Drehzahl vergrößert oder verkleinert. Bei einer Verkleinerung der Drehzahl erfolgt eine Veränderung des Verhältnisses in der anderen Richtung. Bei einer Vergrößerung der Drehzahl wird in der gleichen Richtung fortgefahren.

Erfindungsgemäß erfolgt ein Hin- und Hertakten des Verhältnisses der Einschaltzeit 44 zu der Ausschaltzeit 46, um eine maximale Drehzahl zu erreichen. Die Überprüfung der Drehzahl erfolgt dabei über die Messeinrichtung 34.

Es kann auch vorgesehen sein, dass dem Elektromotor 22 eine Messeinrichtung zugeordnet ist, welche dessen Leistung misst. Die Leistung des Elektromotors 22 ist eine die Drehzahl charakterisierende Größe.

Durch die erfindungsgemäße Lösung lässt sich eine Drehzahlregelung in den Elektromotor 22 integrieren, welche über die integrierte Steuerungseinrichtung 32 erfolgt. Dadurch lässt sich auf einfache Weise während des Betriebs der Solar-Umwälzpumpe 14 eine Leistungsoptimierung erreichen, auch bei variierenden Solarstrahlungsbedingungen.

Diese Regelung lässt sich auf einfache Weise realisieren.

Die Einstelleinrichtung 42 dient zur Optimierung der Solar-Umwälzpumpe 14 im Zusammenhang mit der solarthermischen Kollektoreinrichtung 12. Es lässt sich über die Einstelleinrichtung 42 eine Optimierung bei der Installation erreichen.

Die solarthermische Kollektoreinrichtung 12 kann eine unterschiedliche Anzahl von Solarkollektoren aufweisen, je nach den vorliegenden Verhältnissen. Über die Einstelleinrichtung 42 lässt sich die Solar-Umwälzpumpe 14 anpassen.

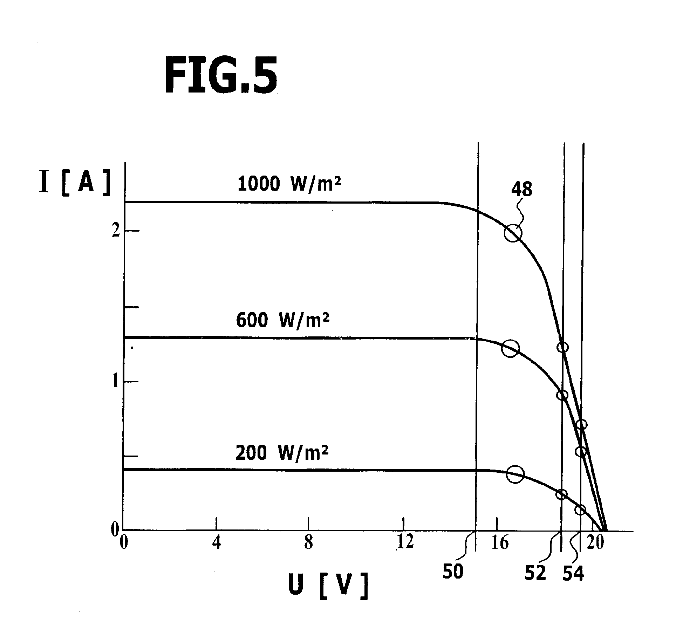

In Figur 5 ist ein I-U-Diagramm einer Photovoltaik-Paneleinrichtung 20 für verschiedene Solareinstrahlungsbedingungen gezeigt. Die von der Photovoltaik-Paneleinrichtung 20 gelieferte elektrische Leistung I x U nimmt mit zunehmender Spannung zu, bis sie ein Maximum erreicht, und fällt dann ab. In dem Diagramm in Figur 5 ist die maximale Leistung durch einen Kreis angezeigt. Für die Solarbestrahlungsstärke von 1000 W/m² ist der Punkt der maximalen Leistung durch das Bezugszeichen 48 angedeutet.

Durch die Einstelleinrichtung 42 wird die minimale Spannung eingestellt, mit welcher der Elektromotor 22 und damit die Solar-Umwälzpumpe 14 durch die Steuerungseinrichtung 32 beaufschlagt wird, wobei diese minimale Spannung fest eingestellt wird. Wie aus dem Diagramm gemäß Figur 5 ersichtlich ist, nimmt oberhalb des Maximums bei einer Vergrößerung der Spannung über den Punkt der maximalen Leistung hinaus die Leistung ab. Durch die Einstelleinrichtung 42 lässt sich deshalb, angepasst an die Anzahl der Solarkollektoren der solarthermischen Einrichtung 12, die Maximalleistung der Solar-Umwälzpumpe 14 einstellen.

Die Einstellung erfolgt bei der Installation in Abhängigkeit von der Anzahl der solarthermischen Kollektoren der solarthermischen Kollektoreinrichtung 12. Die Einstellung erfolgt in Relation zu der Leerlaufspannung der Photovoltaik-Paneleinrichtung 20 insbesondere als bestimmter Prozentsatz. Die Leerlaufspannung der Photovoltaik-Paneleinrichtung 20 (beim Strom Null) lässt sich messen.

Wenn eine große Anzahl von solarthermischen Kollektoren der solarthermischen Kollektoreinrichtung 12 vorliegt, dann kann eine kleine Mindestspannung eingestellt werden. Dies ist in Figur 5 durch das Bezugszeichen 50 angedeutet. Bei dieser Mindestspannung liegt man in der Nähe des Maximums. Es ergibt sich dann auch bei Verringerung der solaren Einstrahlungsleistung eine mindestens näherungsweise proportionale Verringerung der Leistung und damit eine entsprechende Verringerung der Förderleistung der Solar-Umwälzpumpe 14. Dadurch wird sichergestellt, dass die Leistung der Solar-Umwälzpumpe bei Verringerung der solaren Einstrahlung entsprechend zurückgeführt wird, um zu verhindern, dass eine zu starke Umwälzung von Medium in dem Mediumspeicher 16 erfolgt. (Wenn keinen ausreichende Erwärmung des Mediums an der solarthermischen Kollektoreinrichtung 12 erfolgt, dann ist auch keine vollständige Umwälzung des Mediums im Mediumspeicher 16 erwünscht.)

Wenn die solarthermische Kollektoreinrichtung 12 eine geringere Anzahl von Solarkollektoren enthält, dann ist es vorteilhaft, wenn die Mindestspannung größer gewählt ist. Dies ist in Figur 5 durch das Bezugszeichen 52 angedeutet. Wenn eine geringe Anzahl von Solarkollektoren vorliegt, dann ist auch eine geringere Förderleistung notwendig. Eine fest eingestellte Leistungsdrosselung wird dadurch erreicht, dass die Mindestspannung größer gewählt wird, das heisst die Mindestspannung 52 ist größer als die Mindestspannung 50. Dadurch wiederum wird, wie aus dem Diagramm gemäß Figur 5 ersichtlich ist, eine mindestens näherungsweise proportionale Förderrückführung erreicht, wenn die solare Einstrahlungsleistung sinkt. Dadurch wiederum wird verhindert, dass eine zu große Menge an Medium umgewälzt wird.

Bei einer noch geringeren Anzahl an Solarkollektoren für die solarthermische Kollektoreinrichtung 12 ist es vorteilhaft, wenn eine noch größere Mindestspannung gewählt wird. Dies ist in Figur 5 durch das Bezugszeichen 54 angedeutet. (Beispielsweise entspricht die Mindestspannung 50 einer Einstellung für zehn Solarkollektoren, die Mindestspannung 52 einer Einstellung für drei Solarkollektoren und die Mindestspannung 54 einer Einstellung für einen Solarkollektor.) Bei dieser Einstellung lässt sich wiederum eine mindestens näherungsweise proportionale Rückführung der Förderleistung bei Verringerung der solarthermischen Einstrahlungsbedingungen erreichen.

Vorzugsweise wird durch die Einstelleinrichtung 42 eine Mindestspannung 50, 52, 54 eingestellt, welche im Bereich zwischen mindestens 50 % und höchstens 95 % der maximalen Leerlaufspannung der Photovoltaik-Paneleinrichtung 20 liegt.

Durch die erfindungsgemäße Lösung lässt sich für unterschiedliche solarthermische Kollektoreinrichtungen 12 (mit unterschiedlicher Anzahl von Solarkollektoren) eine mindestens näherungsweise Linearsierung erreichen mit einer selbstoptimierenden Pumpe, die angepasst ist an die Zirkulationsanforderungen der entsprechenden solarthermischen Anordnung 10. Bei der Installation wird über die Einstelleinrichtung 42 die Mindestspannung 50, 52, 54 fest eingestellt, um das gegebene System zu optimieren.

Diese Einstellung lässt sich auf einfache Weise durchführen.

## Patentansprüche

1. Solar-Umwälzpumpe (14) zum Anschluss an eine Photovoltaik-Paneleinrichtung (20), mit einem Elektromotor (22), welcher elektronisch kommutiert ist und eine Steuerungseinrichtung (32) aufweist, durch welche ein periodisches Kommutierungssignal bereitstellbar ist, wobei die Steuerungseinrichtung (32) so ausgebildet ist, dass das Kommutierungssignal bezüglich des Verhältnisses von Einschaltzeit (44) zu Ausschaltzeit (46) ständig variiert wird, wobei die Steuerungseinrichtung (32) einen Regelkreis umfasst, bei welchem die Drehzahl eines Rotors (26) des Elektromotors (22) die Regelgröße ist und das Verhältnis von Einschaltzeit (44) und Ausschaltzeit (46) am Kommutierungssignal die Steuergröße ist, wobei die Variation des Verhältnisses von Einschaltzeit (44) und Ausschaltzeit (46) am Kommutierungssignal durch Schritte der Vergrößerung oder Verkleinerung des Verhältnisses erfolgt, und das Regelziel für die Regelgröße eine Maximierung der Drehzahl ist, und wobei eine Messeinrichtung (34) für die Drehzahl oder für eine die Drehzahl charakterisierende Größe vorgesehen ist.

2. Solar-Umwälzpumpe nach Anspruch 1, **dadurch gekennzeichnet, dass** das Kommutierungssignal kontinuierlich variierbar ist.

3. Solar-Umwälzpumpe nach Anspruch 1 oder 2, **dadurch gekennzeichnet, dass** eine Variation des Kommutierungssignals in seiner Form und/oder in seiner Amplitude vorgesehen ist.

4. Solar-Umwälzpumpe nach einem der vorangehenden Ansprüche, **dadurch gekennzeichnet, dass** die Variation des Kommutierungssignals bezüglich Einschaltzeit (44) und Ausschaltzeit (46) auf einer Zeitskala stattfindet, welche sehr viel größer ist als eine Periode (T₁) des Kommutierungssignals.

5. Solar-Umwälzpumpe nach Anspruch 4, **dadurch gekennzeichnet, dass** die Variation des Kommutierungssignals bezüglich Einschaltzeit (44) und Ausschaltzeit (46) auf einer Zeitskala stattfindet, welche in der Größenordnung größer einer Zehntelsekunde liegt.

6. Solar-Umwälzpumpe nach einem der vorangehenden Ansprüche, **dadurch gekennzeichnet, dass** die Messeinrichtung (34) durch einen integrierten Positionsgeber des Elektromotors (22) gebildet ist.

7. Solar-Umwälzpumpe nach einem der vorangehenden Ansprüche, **dadurch gekennzeichnet, dass** eine Leistungsmesseinrichtung für den Elektromotor (22) vorgesehen ist.

8. Solar-Umwälzpumpe nach einem der vorangehenden Ansprüche, **dadurch gekennzeichnet, dass** der Regelkreis in den Elektromotor (22) integriert ist.

9. Solar-Umwälzpumpe nach einem der vorangehenden Ansprüche, **dadurch gekennzeichnet, dass** durch die Steuerungseinrichtung (32) prüfbar ist, ob genügend elektrische Energie für eine Ausrichtung und/oder einen nachfolgenden Anlauf eines Rotors (26) des Elektromotors (22) bereitsteht.

10. Solar-Umwälzpumpe nach Anspruch 9, **dadurch gekennzeichnet, dass** dem Elektromotor (22) ein Pufferspeicher (38) für elektrische Energie zugeordnet ist.

11. Solar-Umwälzpumpe nach Anspruch 10, **dadurch gekennzeichnet, dass** der Pufferspeicher (38) in die Solar-Umwälzpumpe integriert ist.

12. Solar-Umwälzpumpe nach Anspruch 10 oder 11, **dadurch gekennzeichnet, dass** der Pufferspeicher (38) in den Elektromotor (22) integriert ist.

13. Solar-Umwälzpumpe nach einem der Ansprüche 10 bis 12, **dadurch gekennzeichnet, dass** der Pufferspeicher (38) zwischen einer Motorelektronikanordnung (33) des Elektromotors (22) und der Photovoltaik-Paneleinrichtung (20) angeordnet ist.

14. Solar-Umwälzpumpe nach Anspruch 13, **dadurch gekennzeichnet, dass** der Pufferspeicher (38) zwischen der Motorelektronikanordnung (33) und einem elektrischen Anschluss (36) für die Photovoltaik-Paneleinrichtung (20) angeordnet ist.

15. Solar-Umwälzpumpe nach einem der vorangehenden Ansprüche, **dadurch gekennzeichnet, dass** durch die Steuerungseinrichtung (32) ein Zeitfenster zwischen Ausrichtung des Rotors (26) und Anlaufen des Elektromotors (22) vorgebbar ist.

16. Solar-Umwälzpumpe nach einem der Ansprüche 9 bis 15, **dadurch gekennzeichnet, dass** der Elektromotor (22) eine Mehrzahl von Spulen (30a, 30b, 30c) aufweist und dass durch die Steuerungseinrichtung (32) eine Last an eine Spule (30a; 30b; 30c) anlegbar ist, um zu prüfen, ob für eine Ausrichtung des Rotors (26) und/oder einen Anlauf des Elektromotors (22) ausreichend elektrische Energie bereitsteht.

17. Solar-Umwälzpumpe nach Anspruch 16, **dadurch gekennzeichnet, dass** die Last so anlegbar ist, dass keine Bewegung des Rotors (26) des Elektromotors (22) erfolgt.

18. Solar-Umwälzpumpe nach Anspruch 16 oder 17, **dadurch gekennzeichnet, dass** durch die Steuerungseinrichtung (32) die Lastanlegung an die Spule (30a; 30b; 30c) nach einem Initialisierungsvorgang vor Ausrichtung des Rotors (26) des Elektromotors (22) erfolgt.

19. Solar-Umwälzpumpe nach einem der vorangehenden Ansprüche, **dadurch gekennzeichnet, dass** die Steuerungseinrichtung (32) eine Einstelleinrichtung (42) umfasst, durch welche eine untere Grenze für die Spannungsbeaufschlagung des Elektromotors (22) feststellbar einstellbar ist.

20. Solar-Umwälzpumpe nach Anspruch 19, **dadurch gekennzeichnet, dass** durch die Einstelleinrichtung (42) eine Leistungsdrosselung der Solar-Umwälzpumpe einstellbar ist.

21. Solar-Umwälzpumpe nach Anspruch 19 oder 20, **dadurch gekennzeichnet, dass** durch die Einstelleinrichtung (42) die untere Grenze der Spannungsbeaufschlagung in einem Bruchteilbereich der maximalen Leerlaufspannung der Photovoltaik-Paneleinrichtung einstellbar ist.

22. Solar-Umwälzpumpe nach Anspruch 21, **dadurch gekennzeichnet, dass** der Bruchteilbereich zwischen mindestens 50 % und höchstens 95 % der maximalen Leerlaufspannung liegt.

23. Solar-Umwälzpumpe nach einem der vorangehenden Ansprüche, **dadurch gekennzeichnet, dass** der Elektromotor (22) ein bürstenloser Gleichstrommotor ist.

24. Solar-Umwälzpumpe nach einem der vorangehenden Ansprüche, **dadurch gekennzeichnet, dass** der Elektromotor (22) einen permanentmagnetischen Rotor (26) oder einen permanentmagnetischen Stator aufweist.

25. Verfahren zur Regelung einer Solar-Umwälzpumpe (14); welche durch eine Photovoltaik-Paneleinrichtung (20) mit elektrischer Energie versorgt wird und welche einen elektronisch kommutierten Elektromotor (22) aufweist, bei dem ein periodisches Kommutierungssignal ständig bezüglich des Verhältnisses von Einschaltzeit und Ausschaltzeit variiert wird, wobei die Variation des Verhältnisses von Einschaltzeit (44) und Ausschaltzeit (46) am Kommutierungssignal durch Schritte der Vergrößerung oder Verkleinerung des Verhältnisses erfolgt, und wobei die Variation mit dem Ziel der Maximierung der Drehzahl eines Rotors (26) des Elektromotors (22) durchgeführt wird, und die Drehzahl oder eine die Drehzahl charakterisierende Größe gemessen wird.

26. Verfahren nach Anspruch 25 oder 26, **dadurch gekennzeichnet, dass** das Kommutierungssignal in seiner Form und/oder in seiner Amplitude variiert wird.

27. Verfahren nach einem der Ansprüche 25 bis 27, **dadurch gekennzeichnet, dass** die Variation auf einer Zeitskala durchgeführt wird, welche sehr viel größer ist als eine Periode des Kommutierungssignals des Elektromotors (22).

## Claims

1. Solar circulation pump (14) for connection to a photovoltaic panel device (20), comprising an electric motor (22) which is electronically commutated and has a control device (32) for supplying a periodic commutation signal, the control device (32) being so configured that the commutation signal is constantly varied with respect to the ratio of switch-on time (44) to switch-off time (46), the control device (32) comprising a control circuit in which the rotational speed of a rotor (26) of the electric motor (22) is the controlled magnitude, and the ratio of switch-on time (44) and switch-off time (46) in the commutation signal is the control quantity, the variation of the ratio of switch-on time (44) and switch-off time (46) in the commutation signal taking place by steps of increasing or decreasing the ratio, and the control aim for the controlled magnitude being maximization of the rotational speed, and a measuring device (34) being provided for the rotational speed or for a magnitude that characterizes the rotational speed.

2. Solar circulation pump in accordance with claim 1, **characterized in that** the commutation signal is continuously variable.

3. Solar circulation pump in accordance with claim 1 or 2, **characterized in that** a variation of the commutation signal in its shape and/or in its amplitude is provided.

4. Solar circulation pump in accordance with any one of the preceding claims, **characterized in that** the variation of the commutation signal with respect to switch-on time (44) and switch-off time (46) takes place on a time scale which is very much larger than a period (T₁) of the commutation signal.

5. Solar circulation pump in accordance with claim 4, **characterized in that** the variation of the commutation signal with respect to switch-on time (44) and switch-off time (46) takes place on a time scale lying in the order of magnitude of greater than one tenth of a second.

6. Solar circulation pump in accordance with any one of the preceding claims, **characterized in that** the measuring device (34) is formed by an integrated position transducer of the electric motor (22).

7. Solar circulation pump in accordance with any one of the preceding claims, **characterized in that** a power measuring device is provided for the electric motor (22).

8. Solar circulation pump in accordance with any one of the preceding claims, **characterized in that** the control circuit is integrated into the electric motor (22).

9. Solar circulation pump in accordance with any one of the preceding claims, **characterized in that** it is possible to check with the control device (32) whether sufficient electrical energy is available for aligning and/or subsequently starting a rotor (26) of the electric motor (22).

10. Solar circulation pump in accordance with claim 9, **characterized in that** a buffer store (38) for electrical energy is associated with the electric motor (22).

11. Solar circulation pump in accordance with claim 10, **characterized in that** the buffer store (38) is integrated into the solar circulation pump.

12. Solar circulation pump in accordance with claim 10 or 11, **characterized in that** the buffer store (38) is integrated into the electric motor (22).

13. Solar circulation pump in accordance with any one of claims 10 to 12, **characterized in that** the buffer store (38) is arranged between a motor electronics assembly (33) of the electric motor (22) and the photovoltaic panel device (20).

14. Solar circulation pump in accordance with claim 13, **characterized in that** the buffer store (38) is arranged between the motor electronics assembly (33) and an electric connection (36) for the photovoltaic panel device (20).

15. Solar circulation pump in accordance with any one of the preceding claims, **characterized in that** a time slot between aligning the rotor (26) and starting the electric motor (22) is prescribable by the control device (32).

16. Solar circulation pump in accordance with any one of claims 9 to 15, **characterized in that** the electric motor (22) comprises a plurality of coils (30a, 30b, 30c), and **in that** the control device (32) is configured to apply a load to a coil (30a; 30b; 30c) in order to check whether sufficient electrical energy is available for aligning the rotor (26) and/or starting the electric motor (22).

17. Solar circulation pump in accordance with claim 16, **characterized in that** the load can be applied in such a way that no movement of the rotor (26) of the electric motor (22) takes place.

18. Solar circulation pump in accordance with claim 16 or 17, **characterized in that** the load is applied to the coil (30a; 30b; 30c) by the control device (32) after an initialization procedure before aligning the rotor (26) of the electric motor (22).

19. Solar circulation pump in accordance with any one of the preceding claims, **characterized in that** the control device (32) comprises a setting device (42) by means of which a bottom limit for applying voltage to the electric motor (22) is settable in a fixed manner.

20. Solar circulation pump in accordance with claim 19, **characterized in that** a throttling of the performance of the solar circulation pump is settable by the setting device (42).

21. Solar circulation pump in accordance with claim 19 or 20, **characterized in that** the bottom limit for applying voltage is settable in a fractional range of the maximum no-load voltage of the photovoltaic panel device by the setting device (42).

22. Solar circulation pump in accordance with claim 21, **characterized in that** the fractional range lies between at least 50 % and at the most 95 % of the maximum no-load voltage.

23. Solar circulation pump in accordance with any one of the preceding claims, **characterized in that** the electric motor (22) is a brushless DC motor.

24. Solar circulation pump in accordance with any one of the preceding claims, **characterized in that** the electric motor (22) comprises a permanent-magnetic rotor (26) or a permanent-magnetic stator.

25. Method for controlling a solar circulation pump (14) which is supplied with electrical energy by a photovoltaic panel device (20) and which comprises an electronically commutated electric motor (22), wherein a periodic commutation signal is constantly varied with respect to the ratio of switch-on time and switch-off time, wherein the variation of the ratio of switch-on time (44) and switch off time (46) in the commutation signal takes place by steps of increasing or decreasing the ratio, and wherein the variation is carried out with the aim of maximizing the rotational speed of a rotor (26) of the electric motor (22), and the rotational speed or a magnitude that characterizes the rotational speed is measured.

26. Method in accordance with claim 25, **characterized in that** the commutation signal is varied in its shape and/or in its amplitude.

27. Method in accordance with claim 25 or 26, **characterized in that** the variation is carried out on a time scale which is very much larger than a period of the commutation signal of the electric motor (22).

## Revendications

1. Pompe de circulation solaire (14) destinée à être raccordée à un système de panneaux photovoltaïques (20), avec un moteur électrique (22), lequel est commuté électroniquement et présente un dispositif de commande (32), au moyen duquel un signal de commutation périodique peut être mis à disposition, dans laquelle le dispositif de commande (32) est conçu de telle sorte que le signal de commutation est constamment varié au regard du rapport du temps d'activation (44) et du temps de désactivation (46), dans laquelle le dispositif de commande (32) comprend un circuit de régulation, pour lequel la vitesse de rotation d'un rotor (26) du moteur électrique (22) représente la grandeur de régulation et le rapport du temps d'activation (44) et du temps de désactivation (46) au niveau du signal de commutation représente la grandeur de commande, dans laquelle la variation du rapport du temps d'activation (44) et du temps de désactivation (46) au niveau du signal de commutation a lieu au moyen d'étapes d'accroissement ou de réduction dudit rapport, et l'objectif de régulation pour la grandeur de régulation est une maximisation de la vitesse de rotation, et dans laquelle un dispositif de mesure (34) est prévu pour la vitesse de rotation, ou pour une grandeur caractérisant la vitesse de rotation.

2. Pompe de circulation solaire selon la revendication 1, **caractérisée en ce que** le signal de commutation peut être varié continuellement.

3. Pompe de circulation solaire selon la revendication 1 ou 2, **caractérisée en ce qu'**une variation du signal de commutation est prévue dans sa forme et/ou dans son amplitude.

4. Pompe de circulation solaire selon l'une des revendications précédentes, **caractérisée en ce que** la variation du signal de commutation au regard du temps d'activation (44) et du temps de désactivation (46) a lieu sur une échelle de temps, laquelle est très largement supérieure à une période (T₁) du signal de commutation.

5. Pompe de circulation solaire selon la revendication 4, **caractérisée en ce que** la variation du signal de commutation au regard du temps d'activation (44) et du temps de désactivation (46) a lieu sur une échelle de temps, laquelle se situe dans un ordre de grandeur supérieur à un dixième de seconde.

6. Pompe de circulation solaire selon l'une des revendications précédentes, **caractérisée en ce que** le dispositif de mesure (34) est formé par un capteur de position intégré du moteur électrique (22).

7. Pompe de circulation solaire selon l'une des revendications précédentes, **caractérisée en ce qu'**un dispositif de mesure de la puissance est prévu pour le moteur électrique (22).

8. Pompe de circulation solaire selon l'une des revendications précédentes, **caractérisée en ce que** le circuit de régulation est intégré dans le moteur électrique (22).

9. Pompe de circulation solaire selon l'une des revendications précédentes, **caractérisée en ce qu'**il est possible de vérifier au moyen du dispositif de commande (32) si l'énergie électrique mise à disposition est suffisante pour un alignement et/ou un démarrage suivant d'un rotor (26) du moteur électrique (22).

10. Pompe de circulation solaire selon la revendication 9, **caractérisée en ce qu'**une mémoire tampon (38) est affectée au moteur électrique (22) pour l'énergie électrique.

11. Pompe de circulation solaire selon la revendication 10, **caractérisée en ce que** la mémoire tampon (38) est intégrée dans la pompe de circulation solaire (14).

12. Pompe de circulation solaire selon la revendication 10 ou 11, **caractérisée en ce que** la mémoire tampon (38) est intégrée dans le moteur électrique (22).

13. Pompe de circulation solaire selon l'une des revendications 10 à 12, **caractérisée en ce que** la mémoire tampon (38) est disposée entre un circuit électronique du moteur (33) du moteur électrique (22) et le système de panneaux photovoltaïques (20).

14. Pompe de circulation solaire selon la revendication 13, **caractérisée en ce que** la mémoire tampon (38) est disposée entre le circuit électronique du moteur (33) et une connexion électrique (36) pour le système de panneaux photovoltaïques (20).

15. Pompe de circulation solaire selon l'une des revendications précédentes, **caractérisée en ce qu'**une fenêtre de temps peut être prédéfinie entre l'alignement du rotor (26) et le démarrage du moteur électrique (22) au moyen du dispositif de commande (32).

16. Pompe de circulation solaire selon l'une des revendications 9 à 15, **caractérisée en ce que** le moteur électrique (22) présente plusieurs bobines (30a, 30b, 30c) et **caractérisée en ce qu'**une charge peut être appliquée sur une bobine (30a ; 30b ; 30c) au moyen du dispositif de commande (32) afin de vérifier si l'énergie électrique disponible est suffisante pour un alignement du rotor (26) et/ou un démarrage du moteur électrique (22).

17. Pompe de circulation solaire selon la revendication 16, **caractérisée en ce que** la charge peut être appliquée de telle sorte qu'aucun mouvement du rotor (26) du moteur électrique (22) n'ait lieu.

18. Pompe de circulation solaire selon la revendication 16 ou 17, **caractérisée en ce que** l'application de la charge sur la bobine (30a ; 30b ; 30c) a lieu au moyen du dispositif de commande (32), après un processus d'initialisation réalisé avant l'alignement du rotor (26) du moteur électrique (22).

19. Pompe de circulation solaire selon l'une des revendications précédentes, **caractérisée en ce que** le dispositif de commande (32) comprend un dispositif de réglage (42), au moyen duquel il est possible de régler de manière déterminable un seuil plancher pour l'application de la tension du moteur électrique (22).

20. Pompe de circulation solaire selon la revendication 19, **caractérisée en ce qu'**une limitation de la puissance de débit de la pompe de circulation solaire (14) est réglable au moyen du dispositif de réglage (42).

21. Pompe de circulation solaire selon la revendication 19 ou 20, **caractérisée en ce que** le seuil plancher de l'application de la tension est réglable au moyen du dispositif de réglage (42) dans une plage de fraction de la tension maximale de marche à vide du système de panneaux photovoltaïques (20).

22. Pompe de circulation solaire selon la revendication 21, **caractérisée en ce que** la plage de fraction se situe entre au moins 50 % et au plus 95 % de la tension maximale de marche à vide.

23. Pompe de circulation solaire selon l'une des revendications précédentes, **caractérisée en ce que** le moteur électrique (22) est un moteur sans balais à courant continu.

24. Pompe de circulation solaire selon l'une des revendications précédentes, **caractérisée en ce que** le moteur électrique (22) présente un rotor (26) à aimantation permanente ou un stator à aimantation permanente.

25. Méthode de régulation d'une pompe de circulation solaire (14), laquelle est alimentée en énergie électrique au moyen d'un système de panneaux photovoltaïques (20) et laquelle présente un moteur électrique (22) commuté électroniquement, pour lequel un signal de commutation périodique est varié constamment au regard du rapport du temps d'activation (44) et du temps de désactivation (46), dans laquelle la variation du rapport du temps d'activation (44) et du temps de désactivation (46) a lieu au niveau du signal de commutation au moyen d'étapes d'accroissement ou de réduction dudit rapport, et dans laquelle la variation est effectuée avec le but de maximiser la vitesse de rotation d'un rotor (26) du moteur électrique (22), et la vitesse de rotation ou une grandeur caractérisant la vitesse de rotation est mesurée.

26. Méthode selon la revendication 25 ou 26, **caractérisée en ce que** le signal de commutation est varié dans sa forme et/ou dans son amplitude.

27. Méthode selon l'une des revendications 25 à 27, **caractérisée en ce que** la variation est réalisée sur une échelle de temps, laquelle est très largement supérieure à une période du signal de commutation du moteur électrique (22).
